# EUROPEAN PATENT SPECIFICATION

(11) **EP 3 338 605 B1**
(45) Date of publication and mention of the grant of the patent: **28.09.2022**
(21) Application number: 16205735.0
(22) Date of filing: 21.12.2016
(51) Int. Cl.: A47J 43/07

(54) **KITCHEN DEVICE**
KÜCHENVORRICHTUNG
DISPOSITIF DE CUISINE

(43) Date of publication of application: 27.06.2018
(73) Proprietor: BSH Hausgeräte GmbH, 81739 München (DE)
(72) Inventor: Koscak, Ales, 6230 Postojna (SI); Uplaznik, Marko, 3312 Prebold (SI); Zilnik, Marko, 1218 Komenda (SI)

(56) References cited:
- US-A- 3 147 958
- US-A1- 2010 154 660
- US-A1- 2011 049 279
- US-A1- 2015 144 721
- US-A1- 2016 157 678

## Description

The present invention relates to a kitchen device, and more particularly to food processors provided with working tools for slicing, grating or shredding food products, in particular vegetables, fruits or others food products.

Food processing devices providing a number of different types of food preparations, such as mixing, grinding, chopping, slicing, grating, shredding, or other processing operations, are well known. Existing food processing devices, generally include a base housing, an electric motor, a drive shaft driven by motor system, a driven blade, a bowl, a cover with a feed chute, and a feed pusher. Using the feed :chute food can be introduced into the bowl while the cover engages the bowl and while the blade is rotating. This contains chopped food product inside the bowl and prevents user's hands from entering the bowl while the device is operating, since the chute is sized so that a user's hand cannot fit through it. The rotatable driven blade may be in any one of various known forms, a common form is a flat disc provided with radially extending gap of which the edge leading toward the rotational direction is used to cut or slice food product. The leading edge is off-set from the plane of the rest of the disc so that it defines a slice thickness. Typically the gap is formed be press cutting a single metal sheet that forms the disc and bending the area that attaches the leading edge to the rest of the disc. For cutting food products into strips cutting blade and gap is usually provided with additional vertical blades for cutting product in the vertical plane. Sometimes an attachment is fixed to the disc. In either form, the slice thickness gap and/or distance between vertical knives is fixed and constant. As a result, owners of food processors should purchase more than one disc if he wants to produce different product like slices or stripes of different size.

The document US2011049279 (A1) discloses a dicing element assembly comprises a dicing element having multiple elements defining multiple openings through which food may pass and a management tool having multiple projections sized to be received by the dicing openings, with at least some of the projections having a coupling element for releasably coupling the dicing elements when the projections are received within the dicing openings. When the projections are received within the dicing openings, the coupling element couples with the dicing element and a user may move the dicing element by moving the management tool without touching the dicing element.

The document US2010154660 (A1) discloses a food processor defining a food processing path comprises a frame having a first compartment located within the food processing path and a second compartment located out of the food processing path and at least one dicing element configured to be received in both of the first and second compartments. When the dicing element is received in the first compartment, the dicing element dices food passing through the food processing path, and when the dicing element is received in the second compartment, the dicing element is stored out of the food processing path.

The document US2016157678 (A1) a dicer includes a body providing a motor, a container and a container cover, a feeding tube extending on the container cover, a push rod in the feeding tube, a power output shaft in the container, deceleration components and cutter disks on the output shaft. The cutter disks comprises a slicing cutter disk and a dicing cutter disk, a block in the container cover, a handle in the slicing cutter disk, and through-holes in the dicing cutter disk. The dicer is able to cut food into pieces with the same shape and size. The deceleration components are provided in the container and have simple structure, which occupy small space. The handle is provided on the slicing cutter disk for facilitating to detach the slice cutter disk for cleaning, and a through-hole is defined in the dicing cutter disk for facilitating to detach the dicing cutter disk for cleaning.

The objective of the present invention is to provide a kitchen device, and more particular a food processor with working tool that accommodates more than one kind of processed food product and/or different size.

This object of the invention is achieved by the technical features described in the claim 1. Additional technical features and preferred embodiments of the invention are given in the dependent claims.

The foregoing general description and detailed description, given hereafter, are merely exemplary and are understood as additional explanations of the claimed invention. Other advantages and features of the invention result from the following descriptions, drawings and claims.

In accordance with present invention, there is provided a kitchen device with at least one working tool equipped with a main disc and a corresponding processing disc. Said processing disc comprising a top processing surface with a first set of processing tools and a bottom processing surface, wherein selection an operational mode of the kitchen device is provided by flipping and/or rotating said processing disc with respect to main disc. Working tool has a disc-shape and is made up of two disc processing disc which is mounted in a lower part of working tool and main disc mounted at the upper part of working tool, mounted together create a ready to work working tool. Because processing disc has two sides which can be provided with different processing tool, therefore by flipping said processing disc and then mounted it together with main disc it is possible to process foods to different kind of product as slices or strips or julienne strips. It is achieved without using additional attachment. Different sets of processing tools can be placed on the top or/and bottom processing surface of the processing disc, favorable symmetrically around rotational axis. By coaxially rotating one disc in respect to second is possible to select appropriate processing surface with/without set of processing tool. During the processing food, processing surface and/or set of processing tools cooperates with opening of the main disc with is equipped with knife edge leading toward the rotational direction using to cut or slice food product. After assembling the main disc with the processing disc, the opening of the main disc reveals required processing surface with set of processing tools. Others processing tools, from the same side of processing disc are covered by working surface or hidden in a slots. Suitable connection and relative positions of the processing to main disc is provided by fixing device. In this way we get a several combinations of the operation mode for processing food to different kind of product. Working tool is driven by central opening which is prepared to receive driving shaft of the drive means.

In the preferred embodiment of the invention the working tool comprising processing disc and main disc which have substantially identical diameter. Therefore changes of the operational mode and assembling and disassembling working tool is easy to achieve and it is possible to utilize whole surface of processing and main disc to place on it the set of the processing tools, what positively affects the efficiency of processing food

In the favorable embodiment of the invention the kitchen device is provided with the working tool wherein the processing disc and the main disc are detachably connected each other for easy changing the operational mode and assembling/disassembling each other.

In another embodiment of the invention the bottom processing surface of the processing disc is provided with a second set of processing tools for food processing. Having another sets of the processing tools allows to adjust working tool and in the consequence kind of processed food, to client requirements of size, thickness etc, kind of the processed food. Favorable the main disc of the working tool is provided with a peripheral collar for receiving the processing disc. Therefore after assembling each other the peripheral collar cover the lateral edge of the processing disc. Moreover the diameter of the processing disc and inner diameter of the collar can be approximately the same, for making easy connection between each other.

Favorable coupling of the main disc to the processing disc is realized by snapping means or bayonet connection or press fit connection. Therefore an easy and detachable connection between the main disc and the processing disc is achieved for changing the operation mode, cleaning, storing, etc.

According to the invention a working surface of the working tool is created by upper surface of the main disc with a recess and the top processing surface or the bottom processing surface. After assembling the working tool, the main disc is placed in the upper part of the working tool coaxially above the processing disc. Because of the opening of the main disc, part of the processing surface bottom or top of the processing disc is not cover by the main disc. Therefore this part of the processing surface, the working surface of the main disc and recess which edge can be supported by rip take a part with processing food.

The working tool comprising a fixing device to determine the relative position of the main disc and the processing disc. The processing disc is provided with top and/or bottom processing surface having or not set of the processing tools. If not have, the working tool is adapted for cutting the food to slices, and by changing operational mode it is e.g. possible to change the thickness of the product by coaxial rotation the processing disc with respect to the main disc and fixing by fixing device. It is possible because the processing surface can be divided for surfaces at the different heights in relation to longitudinal axis of the processing surface so gap between leading edge of the knife and the processing surface can be adjusted.

In the preferred embodiment of the invention the fixing device comprising a first fixing element disposed at the processing disc and a second fixing element disposed at the processing disc, to cooperate with each other. Therefore easy fixing the processing disc to the main disc and setting up of the operational mode is reached.

According to the invention the main disc is provided with at least one knife extending radially between a center and periphery of the main disc. The knife is indented for cutting the processing food in the plane of the working surface. During food processing, knife rotates with the working tool around the axis R and cuts the food in the plane of the working surface.

In another embodiment of the invention the knife is V-shaped, wherein a symmetrical axis of the V shaped knife is parallel to the tangent of the main disc periphery. Using V-shapped knife with slanted leading edge allows to achieve better processed food. Preferably the top processing surface and/or the bottom processing surface is provided with at least one rib for supporting the edge of the recess of the main disc which improves the rigidity of the disc and in addition cover the gap between the edge of the recess of the main disc and the processing surface of the processing disc.

In the preferred embodiment of the invention the top processing surface is provided with a first set of processing tools as the rows of vertical blades for cutting food to the stripes. Size of the stripes depends on the distance between said vertical blades. The top or/and bottom processing surface can be provided with several sets of processing tool with different distance between the vertical blades, Therefore by changing operational mode using fixing device, it is possible to have required size of processed food.

In the another embodiment of the invention processing surface is substantially flat. At the time, the working tool is intended to cut food into slices. Processing surface supports the processed and also establishes the gap between the knife and itself what directly affect the thickness of slices.

The present invention provides a kitchen device provided with the working tool comprising the main disc and processing disc. Said discs can be configured in different relative position each other for achieving the several operation mode. Therefore one working tool according to the invention can replace several common slicing discs for kitchen device. The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
- Fig. 1: shows both sides of the processing disc.
- Fig. 2: shows the main disc.
- Fig. 3: shows the working tool in an operational mode.
- Fig. 4: shows the working tool in other operational mode.

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

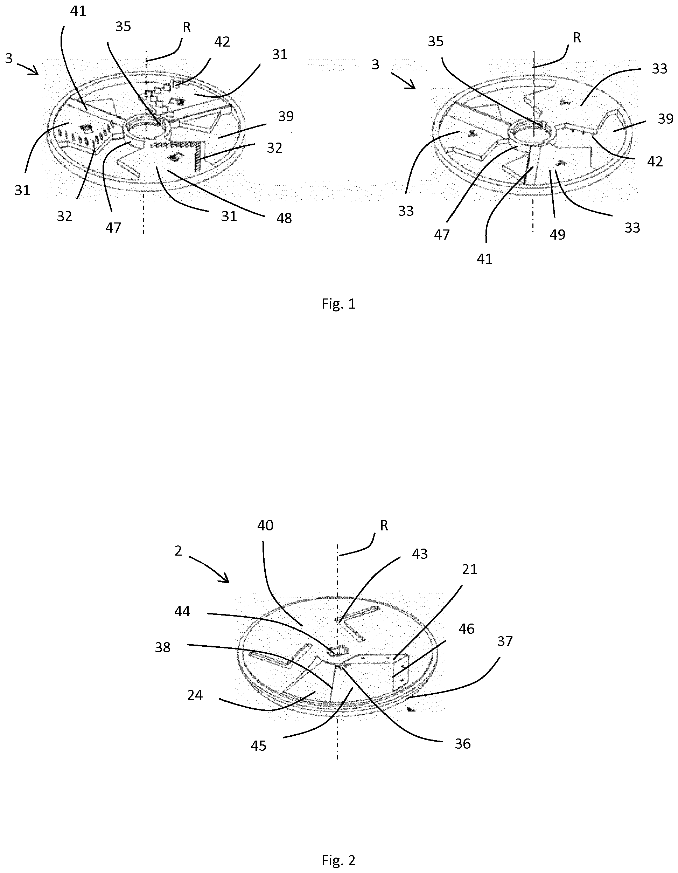

Reference is made to Fig. 1 which shows both sides of the processing disc 3. The top processing surface 31 of the processing disc 3 is divided to three parts 48 disposed symmetrically around axis R. Each of the parts 48 of the top processing surface 31 is provided with first set of processing tools 32. The processing tools 32 are made in a form of three sets of the vertical blades 42. Additionally each parts 48 of the processing surface 31 are placed on the different heights in respect with longitudinal axis of the processing disc 3. Also each set of vertical blades 42, have different distance between blades, i.e. 2mm, 3mm, 5mm. The top processing surface 31 has two radially disposed ribs for filling a gap between part 48 of the processing surface 31 and the edge 38 and for supporting it. The second side of the processing disc 3 is created by the bottom processing surface 33 which is substantially flat. The bottom processing surface 33 is also spitted to three parts 49. These are the same parts of the processing disc 3 for the top and the bottom processing surface. Thus because of the different heights of the each parts 48 also parts 49 are placed on the different heights in respect with the longitudinal axis of the processing disc 3. The processing disc 3 has an inner collar 47 which is provided with the first fixing element 35. Said fixing element 35 is in the form of three longitudinal symetrical grooves placed inside on the inner collar 47 and cooperate with the second fixing element 36 of the main disc 2 in the shape of three longitudinal to an axis R, symmetrical around the axis R projections (not shown on this figure).

As shown in Fig. 2, the main disc 2 has on the upper side the working surface 40, provided with the V-shaped knife 21, with the leading edge 46. The symmetrical axis of the V-shaped knife 21 is parallel to the tangent of the main disc 2 periphery. The central opening 44 is placed in the centre of the main disc 2 and is prepared for receiving the driven shaft (not shown on this figure) for rotating working tool 1. The main disc 2 on the bottom side is provided with the second fixing element 36 in the shape of three longitudinal to the axis R, projections (only one is shown on this figure). Said second fixing element 36 cooperates with first fixing element 35, namely the projections are being received by the grooves, therefore the relative position of the processing disc 3 and the main disc 2 can be established. The change of the relative position of said disc change the operational mode eg. change the thickness of the processed product. The working surface 40 is provided with two V-shaped slot 43 to place the vertical blades 42, and with the opening 45 which reveals the appropriate part of the top or bottom processing surface. Said opening 45, from one side is limited by the edge 38 of the recess 24, from another side by the leading edge 46 of the knife 21. Also said main disc 2 having the peripheral collar 37, placed on the periphery on the bottom side of the main disc 2 for receiving the processing disc 3.

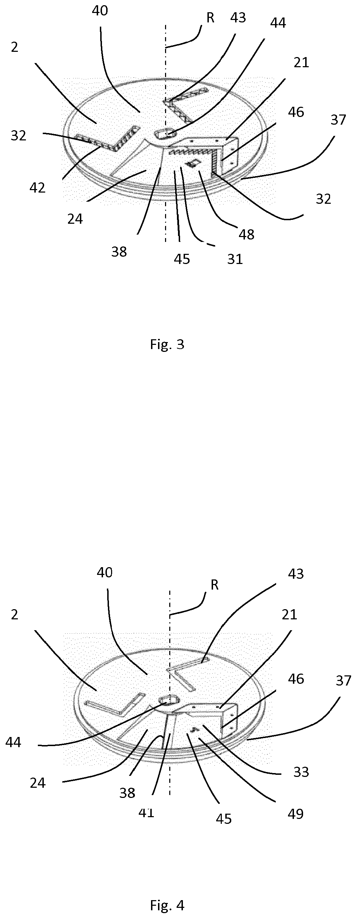

On Fig. 3 is shown the working tool 1 configured in the operational mode for processing food, eg. carrots to the stripes with square cross-section 2x2 mm. Further the distance between vertical blades 42 is 2mm and the gap between leading edge 46 and part 48 of the top processing surface 31 is 2mm. In the upper part of the working tool 1 is disposed main disc 2, comprising working surface 40, recess 24 with the edge 38, knife 21, slots 43 for keeping first set of processing tools 32, peripheral ring 37, central opening 44 for driving working tool 1 and main disc opening 45 which reveals appropriate part 48 of the top processing surface 31. In the bottom part of the working tool 1 is placed the processing disc 3, wherein the top processing surface 31 is directed towards the main disc 2. The processing disc 3 is mounted to the main disc 2 using press fit connection between inner side of peripheral ring 37 and peripheral surface of the processing disc 3. The operational mode is kept by first and second fixing element 35, 36 (not shown).

Reference is made to Fig. 4 which shows other operational mode of the working tool 1, i.e. for processing food, eg. carrots to slices. The thickness of the slices is formed by the gap between the part 49 of the bottom processing surface 33 and the leading edge of the knife 21. In the presented operational mode the thickness of the slices is 5 mm. In the upper part of the working tool 1 is disposed main disc 2, comprising working surface 40, recess 24 with the edge 38, knife 21, slots 43 for keeping first set of processing tools 32, peripheral ring 37, central opening 44 for driving working tool 1 and main disc opening 45 which reveals appropriate part 49 of the bottom processing surface 33. In the bottom part of the working tool 1 is placed the processing disc 3, wherein the bottom processing surface 33 is directed towards the main disc 2. The processing disc 3 is mounted to the main disc 2 using press fit connection between inner side of peripheral ring 37 and peripheral surface of the processing disc 3. The operational mode is kept by first and second fixing element 35, 36 (not shown).

Although the invention has been explained in relation to its preferred embodiment(s) as mentioned above, it is to be understood that many other possible modifications and variations can be made without departing from the scope of the present invention as defined in the appended claims. It is, therefore, contemplated that the appended claim or claims will cover such modifications and variations that fall within the true scope of the invention.

### Reference signs:

- 1: working tool
- 2: main disc
- 3: processing disc
- 21: knife
- 24: recess
- 31: top processing surface
- 32: first set of processing tools
- 33: bottom processing surface
- 35: first fixing element
- 36: second fixing element
- 37: peripheral collar
- 38: edge
- 39: processing disc opening
- 40: working surface
- 41: rib
- 42: vertical blades
- 43: slot
- 44: central opening
- 45: main disc opening
- 46: leading edge
- 47: inner collar
- 48: part of the top processing surface
- 49: part of the bottom processing surface
- R -: rotational axis

## Claims

1. A kitchen device having a driving means with a driving shaft, and with at least one working tool (1) comprising a main disc (2) and a corresponding processing disc (3) which are held coaxially in fixed relative mutual position by a fixing device, and with a central opening (44) which is prepared to receive the driving shaft for rotating the said working tool (1) to process food, wherein the working tool (1) has a working surface (40) that is formed by an upper surface of the main disc (2) with a recess (24), a main disc opening (45), at least one knife (21) extending radially between a center and periphery of the main disc (2), and with a portion of the top processing surface (31) or portion of the bottom processing surface (33) of the processing disc (3) that is revealed by the opening (45), wherein the processing disc (3) comprises a top processing surface (31) with a first set of processing tools (32) and a bottom processing surface (33), and in that a selection of an operational mode of the kitchen device is provided by flipping and/or rotating the processing disc (3) with respect to the main disc (2).

2. A kitchen device according to claim 1 **characterized in that** the processing disc (3) and main disc (2) have substantially identical diameter.

3. A kitchen device according to any one of proceeding claims **characterized in that** the bottom processing surface (33) is provided with a second set of processing tools for food processing.

4. A kitchen device according to any one of proceeding claims, **characterized in that** said main disc (2) is provided with a peripheral collar (37) for receiving the processing disc (3).

5. A kitchen device according to any one of proceeding claims, **characterized in that** the main disc (2) and the processing disc (3) are connected to each other by snapping means or bayonet connection or press fit connection.

6. A kitchen device according to any of proceedings claims, **characterized in that** the fixing device comprises a first fixing element (35) disposed at the processing disc (3) and a second fixing element (36) disposed at the processing disc (3), to cooperate with each other.

7. A kitchen device according to any of proceedings claims , **characterized in that** the knife (21) is V-shaped, wherein a symmetrical axis of the V shaped knife is parallel to the tangent of the main disc (2) periphery.

8. A kitchen device according to any of proceedings claims **characterized in that** the top processing surface (31) and/or the bottom processing surface (33) is provided with at least one rib (41) for supporting the edge (38) of the recess (24) of the main disc (2).

9. A kitchen device according to any of proceedings claims **characterized in that** the top processing surface (31) is provided with a first set of processing tools (32) as the rows of vertical blades (42).

10. A kitchen device according to any of proceedings claims **characterized in that** the bottom processing surface (33) is substantially flat.

## Patentansprüche

1. Küchenvorrichtung, die ein Antriebsmittel mit einer Antriebswelle aufweist, und mit mindestens einem Arbeitswerkzeug (1), das eine Hauptscheibe (2) und eine entsprechende Verarbeitungsscheibe (3) umfasst, die von einer Fixiervorrichtung koaxial in einer zueinander festen Position gehalten werden, und mit einer mittigen Aussparung (44), die so ausgelegt ist, dass sie die Antriebswelle zum Drehen des Arbeitswerkzeugs (1) zwecks Verarbeitens von Lebensmitteln aufnehmen kann, wobei das Arbeitswerkzeug (1) eine Arbeitsfläche (40) aufweist, die von einer oberen Fläche der Hauptscheibe (2) mit einer Vertiefung (24), einer Hauptscheibenaussparung (45), mindestens einem Messer (21), das radial zwischen einem Mittelpunkt und einem Umfang der Hauptscheibe (2) verläuft, und einem Abschnitt der oberen Verarbeitungsfläche (31) oder einem Abschnitt der unteren Verarbeitungsfläche (33) der Verarbeitungsscheibe (3) gebildet wird, der durch die Aussparung (45) sichtbar ist, wobei die Verarbeitungsscheibe (3) eine obere Verarbeitungsfläche (31) mit einem ersten Satz Verarbeitungswerkzeuge (32) und eine untere Verarbeitungsfläche (33) umfasst, und eine Auswahl eines Betriebsmodus der Küchenvorrichtung durch Umdrehen und/oder Drehen der Verarbeitungsscheibe (3) in Bezug auf die Hauptscheibe (2) erfolgt.

2. Küchenvorrichtung nach Anspruch 1, **dadurch gekennzeichnet, dass** die Verarbeitungsscheibe (3) und die Hauptscheibe (2) im Wesentlichen den gleichen Durchmesser aufweisen.

3. Küchenvorrichtung nach einem der vorhergehenden Ansprüche, **dadurch gekennzeichnet, dass** die untere Verarbeitungsfläche (33) mit einem zweiten Satz Verarbeitungswerkzeuge für die Lebensmittelverarbeitung versehen ist.

4. Küchenvorrichtung nach einem der vorhergehenden Ansprüche, **dadurch gekennzeichnet, dass** die Hauptscheibe (2) mit einem umlaufenden Bund (37) zum Aufnehmen der Verarbeitungsscheibe (3) versehen ist.

5. Küchenvorrichtung nach einem der vorhergehenden Ansprüche, **dadurch gekennzeichnet, dass** die Hauptscheibe (2) und die Verarbeitungsscheibe (3) über Einrastmittel oder eine Bajonettverbindung oder eine Presssitzverbindung miteinander verbunden sind.

6. Küchenvorrichtung nach einem der vorhergehenden Ansprüche, **dadurch gekennzeichnet, dass** die Fixiervorrichtung ein an der Verarbeitungsscheibe (3) angeordnetes, erstes Fixierelement (35) und ein an der Verarbeitungsscheibe (3) angeordnetes zweites Fixierelement (36) umfasst, die miteinander zusammenwirken.

7. Küchenvorrichtung nach einem der vorhergehenden Ansprüche, **dadurch gekennzeichnet, dass** das Messer (21) V-förmig ist, wobei eine Symmetrieachse des V-förmigen Messers parallel zur Tangente des Umfangs der Hauptscheibe (2) verläuft.

8. Küchenvorrichtung nach einem der vorhergehenden Ansprüche, **dadurch gekennzeichnet, dass** die obere Verarbeitungsfläche (31) und/oder die untere Verarbeitungsfläche (33) mit mindestens einer Rippe (41) zum Halten des Randes (38) der Vertiefung (24) der Hauptscheibe (2) versehen ist.

9. Küchenvorrichtung nach einem der vorhergehenden Ansprüche, **dadurch gekennzeichnet, dass** die obere Verarbeitungsfläche (31) mit einem ersten Satz Verarbeitungswerkzeuge (32) als Reihen vertikaler Messer (42) versehen ist.

10. Küchenvorrichtung nach einem der vorhergehenden Ansprüche, **dadurch gekennzeichnet, dass** die untere Verarbeitungsfläche (33) im Wesentlichen eben ist.

## Revendications

1. Dispositif de cuisine ayant un moyen d'entraînement avec un arbre d'entraînement, et avec au moins un outil de travail (1) comprenant un disque principal (2) et un disque de transformation correspondant (3) qui sont maintenus coaxialement en position mutuelle relative fixe par un dispositif de fixation, et avec une ouverture centrale (44) qui est préparée pour recevoir l'arbre d'entraînement pour faire tourner ledit outil de travail (1) pour transformer les aliments, dans lequel l'outil de travail (1) a une surface de travail (40) qui est formée par une surface supérieure du disque principal (2) avec un évidement (24), une ouverture de disque principal (45), au moins un couteau (21) s'étendant radialement entre un centre et une périphérie du disque principal (2), et avec une partie de la surface de transformation supérieure (31) ou une partie de la surface de transformation inférieure (33) du disque de transformation (3) qui est révélée par l'ouverture (45), dans lequel le disque de transformation (3) comprend une surface de transformation supérieure (31) avec un premier jeu d'outils de transformation (32) et une surface de transformation inférieure (33), et où une sélection d'un mode de fonctionnement du dispositif de cuisine est fournie en retournant et/ou en faisant tourner le disque de transformation (3) par rapport au disque principal (2).

2. Dispositif de cuisine selon la revendication 1 **caractérisé en ce que** le disque de transformation (3) et le disque principal (2) ont des diamètres sensiblement identiques.

3. Dispositif de cuisine selon l'une quelconque des revendications précédentes **caractérisé en ce que** la surface de transformation inférieure (33) est munie d'un deuxième jeu d'outils de transformation pour la transformation des aliments.

4. Dispositif de cuisine selon l'une quelconque des revendications précédentes, **caractérisé en ce que** ledit disque principal (2) est muni d'une collerette périphérique (37) pour recevoir le disque de transformation (3).

5. Dispositif de cuisine selon l'une quelconque des revendications précédentes, **caractérisé en ce que** le disque principal (2) et le disque de transformation (3) sont reliés l'un à l'autre par des moyens d'encliquetage ou un raccord à baïonnette ou un raccord à ajustement serré.

6. Dispositif de cuisine selon l'une des revendications précédentes, **caractérisé en ce que** le dispositif de fixation comprend un premier élément de fixation (35) disposé au niveau du disque de transformation (3) et un deuxième élément de fixation (36) disposé au niveau du disque de transformation (3), pour coopérer l'un avec l'autre.

7. Dispositif de cuisine selon l'une des revendications précédentes, **caractérisé en ce que** le couteau (21) est en forme de V, dans lequel un axe symétrique du couteau en forme de V est parallèle à la tangente de la périphérie du disque principal (2).

8. Dispositif de cuisine selon l'une des revendications précédentes, **caractérisé en ce que** la surface de transformation supérieure (31) et/ou la surface de transformation inférieure (33) est/sont munie(s) d'au moins une nervure (41) pour supporter le bord (38) de l'évidement (24) du disque principal (2).

9. Dispositif de cuisine selon l'une des revendications précédentes, **caractérisé en ce que** la surface de transformation supérieure (31) est munie d'un premier jeu d'outils de transformation (32) comme les rangées de lames verticales (42).

10. Dispositif de cuisine selon l'une des revendications précédentes, **caractérisé en ce que** la surface de transformation inférieure (33) est sensiblement plate.
